# FASCICULE DE BREVET EUROPEEN

(11) **EP 1 141 899 B1**
(45) Date de publication et mention de la délivrance du brevet: **20.04.2005**
(21) Numéro de dépôt: 00900557.0
(22) Date de dépôt: 11.01.2000
(51) Int. Cl.: G06T 17/20

(54) **PROCEDE DE SIMPLIFICATION D'UN MAILLAGE SOURCE, TENANT COMPTE DE LA COURBURE LOCALE ET DE LA DYNAMIQUE GEOMETRIQUE LOCALE, ET APPLICATIONS CORRESPONDANTES**
VERFAHREN ZUR QUELLNETZVEREINFAHCUNG MIT BERÜCKSICHTIGUNG DER ÖRTLICHEN KRÜMMUNG UND DER ÖRTLICHEN GEOMETRIE, UND DESSEN ANWENDUNGEN
METHOD FOR SIMPLIFYING A SOURCE MESH, TAKING INTO ACCOUNT THE LOCAL CURVATURE AND THE LOCAL GEOMETRY, AND CORRESPONDING USES

(30) Priorité: 11.01.1999 FR 9900304
(43) Date de publication de la demande: 10.10.2001
(73) Titulaire: FRANCE TELECOM, 75015 Paris (FR); TELEDIFFUSION DE FRANCE, 75732 Paris Cédex 15 (FR)
(72) Inventeur: LAURENT-CHATENET, Nathalie, F-35700 Rennes (FR); ALLIEZ, Pierre, F-35510 Cesson Sévigné (FR)
(74) Mandataire: Vidon, Patrice
(86) Numéro de dépôt international: PCT/FR2000/000046
(87) Numéro de publication internationale: WO 2000/042575

(56) Documents cités:
- US-A- 5 590 248
- KLEIN R ET AL: "MESH REDUCTION WITH ERROR CONTROL" VISUALIZATION '96. PROCEEDINGS OF THE VISUALIZATION CONFERENCE, SAN FRANCISCO, OCT. 27 - NOV. 1, 1996, 27 octobre 1996 (1996-10-27), pages 311-318, XP000704204 YAGEL R;NIELSEN G M

## Description

### 1 . Domaine de l'invention et applications

### 1.1 Domaine de l'invention

Le domaine de l'invention est celui du codage de structures de données géométriques, ou maillages, notamment de grande taille. Plus précisément, l'invention concerne la représentation et le codage d'objets ou de scènes en trois dimensions. Plus précisément encore, l'invention concerne une technique d'approximation d'un maillage source en trois dimensions pouvant être utilisée seul, ou en combinaison avec d'autres techniques connues. Dans ce dernier cas, le procédé de l'invention peut constituer une étape avantageuse d'initialisation.

Un maillage est classiquement défini par un ensemble de sommets et de faces orientées définissant une topologie. De tels maillages sont par exemple utilisés en graphisme sur ordinateur, pour modéliser des objets en trois dimensions avec une complexité géométrique limitée.

L'approximation d'un maillage M consiste à trouver un maillage M' dont la complexité géométrique est moindre que celle du maillage M. et qui approche au mieux la géométrie de M.

### 1.2 Exemples d'applications

L'invention trouve des applications dans tous les domaines où il est souhaitable de réduire le nombre d'informations nécessaires pour représenter et/ou manipuler efficacement un objet en trois dimensions ou un ensemble d'objets, par exemple pour l'analyser, le stocker et/ou le transmettre et/ou en assurer le rendu.

A titre indicatif, l'invention peut notamment s'appliquer au domaine de : 6.la réalité virtuelle (visites ou boutiques virtuelles, loisirs, télémanipulation, etc...). Dans ce type d'application, l'approximation de maillages permet de réduire le coût de rendu de scènes complexes, en particulier en définissant la notion d'échelonnabilité sur les maillages (fonction du point de vue, des capacités graphiques, du taux de rafraîchissement souhaité, ...). Dans le cas de la réalité virtuelle distribuée ou partagée, cela permet également d'adapter la complexité d'une scène aux capacités de rendu et de stockage des différents terminaux, ainsi qu'aux débits des réseaux ;
- la simulation scientifique (éléments finis, CAO, etc...). La réduction de la complexité géométrique des modèles permet une accélération des temps de calcul, une prise de décisions plus rapide, notamment lors de la conception en CAO, et l'élimination des informations redondantes dans une base de données 3D ;
- la modélisation (scanner 3D (reconstruction de surfaces à partir de points non organisés), scanners volumiques, reconstruction de surfaces à partir de photos stéréoscopiques ou de séquences vidéo, de modèles numériques de terrains (imagerie satellite ou radar), etc...). Un modèle numérique de terrain permet ainsi l'obtention d'un maillage représentant la topologie d'une région. Un tel maillage est obtenu par l'échantillonnage régulier d'une image stockant l'information d'altitude en chaque point. Il en résulte une quantité de données importante, comprenant des informations inutiles pour la simulation scientifique, ou trop coûteuse pour le rendu (dans le cas de simulateurs). L'approximation de maillages réduit la quantité de données, tout en garantissant une bonne fidélité géométrique aux données initiales et la conservation de la topologie.

### 2. Art antérieur

### 2.1 Les familles d'algorithmes

Plusieurs techniques d'approximation de maillages sont déjà connues. Les plus répandues peuvent être classées en trois grandes familles d'algorithmes selon qu'elles fonctionnent par :
- décimation ;
- ré-échantillonnage sous-critique ;
- subdivision adaptative.

### 2.1.1 décimation

La décimation consiste à retirer de manière itérative des sommets et/ou des faces d'un maillage. Cette opération est appelée opération élémentaire de simplification. Les méthodes mettant en oeuvre ce principe de décimation peuvent également optimiser les positions des sommets après ou pendant la simplification, cette dernière étant choisie de manière à préserver au mieux la topologie du maillage.

### 2.1.2 ré-échantillonnage sous-critique

Le ré-échantillonnage consiste à échantillonner un modèle original, soit en prenant des points aléatoirement sur sa surface et en retriangulant ensuite soit en définissant une grille tridimensionnelle et en agglomérant les sommets dans chaque boîte élémentaire de la grille. Le modèle ainsi généré est simplifié, et doit approximer au mieux les données initiales. Cette technique est rapide, mais ne conserve pas la topologie ni les caractéristiques visuellement importantes des maillages.

### 2.1.3 subdivision adaptative

La subdivision adaptative commence avec un modèle comportant une géométrie très simple, que l'on subdivise récursivement ensuite, en ajoutant à chaque itération un détail dans les régions ou l'erreur d'approximation est maximale.

### 2.1.4 combinaisons d'algorithmes

De façon à permettre une approximation d'un maillage avec une qualité de reconstruction satisfaisante, il est nécessaire de combiner une décimation et une optimisation des positions des sommets conservés. En d'autres termes, l'objectif de base d'un procédé de codage d'un maillage source étant de maximiser la qualité de l'approximation pour une complexité géométrique donnée, celui-ci doit notamment présenter les propriétés suivantes :
- décimation ;
- préservation de la topologie ;
- optimisation des positions, suivant un critère d'erreur prédéfini.

On connaît ainsi une première méthode appelée « remaillage », répondant à ces critères. Elle est notamment présentée dans le document « re-tiling polygonal surfaces » par Greg TURK (SIGGRAPH 92 Conference proceedings, p. 55-64, 92). Elle fonctionne par échantillonnage, décimation et optimisation des positions.

Une autre technique connue, appelée « codages progressifs de maillages », a été développée par Hugues HOPPE, dans le document « Progressive meshes » (SIGGRAPH 96 Conference proceedings, p. 99-108, 1996). Elle repose sur la décimation et l'optimisation des points.

Encore une autre technique est décrite dans la demande de brevet FR-98 13090 déposée le 15/10/98, et non encore publiée.

On connait également, du document US5,590,248, une technique de réduction de la complexité d'un maillage, assurant la suppression de sommets ou de polygones, en fonction de la distance entre un sommet candidats et tous les plans formés par des triplets de sommets adjacents à ce sommet candidat. Cette méthode est complexe, car elle suppose le réglage de 4 seuils et coûteuse en temps de calcul, car elle passe en revue tous les sommets et/ou polygones à chaque séquence.

### 3. Objectifs de l'invention

L'invention concerne plus particulièrement la technique de décimation, mise en oeuvre, par exemple par ces différentes techniques.

L'invention a notamment pour objectif de pallier les différents inconvénients des techniques connues.

Ensuite, un objectif de l'invention est de fournir un procédé de simplification de maillage par décimation (fusion d'arêtes), qui soit plus efficace, en termes de qualité perceptuelle, que les techniques connues.

En d'autres termes, un objectif de l'invention est de fournir un tcl procédé présentant, jusqu'à un niveau élevé de décimation, une conservation des singularités des maillages, et une préservation de la topologie.

L'invention a également pour objectif de fournir un tel procédé, qui soit simple à mettre en oeuvre, en termes de calculs à effectuer, et qui présente une bonne vitesse d'exécution.

Selon un premier aspect de l'invention, un autre objectif est de fournir un tel procédé, qui puisse être utilisé seul, afin de fournir une méthode rapide de simplification de maillages.

Selon un second aspect de l'invention, un objectif est de fournir un tel procédé de décimation, qui puisse être utilisé, de façon à l'améliorer, dans un procédé d'optimisation géométrique de maillage.

### 4. Caractéristiques principales de l'invention

Ces objectifs, ainsi que d'autres qui apparaîtront par la suite, sont atteints à l'aide d'un procédé de simplification d'un maillage source M formé d'une pluralité de surfaces définies par des sommets, des faces et des orientations sur ces dernières, mettant en oeuvre une étape de décimation par fusion d'arête, consistant à ramener une arête à décimer, définie par deux sommets, à un sommet unique se situant sur le segment défini par ladite arête à décimer, de façon à obtenir un maillage simplifié M'.

L'invention repose donc sur une approche nouvelle de la décimation, consistant à fusionner des arêtes, alors que les techniques connues visent à supprimer des sommets. Comme on le verra par la suite, cette approche peut permettre de simplifier les traitements (par exemple : suppression de la phase de retriangulation nécessaire lorsque l'on met en oeuvre une suppression de sommets) et d'optimiser la qualité du résultat (notamment : prise en compte de la courbure, position du sommet résultant de la fusion d'arêtes,...).

De façon avantageuse, le procédé comprend une étape de sélection d'une fusion d'arête à effectuer, parmi toutes les fusions d'arête possibles, tenant compte :
- d'au moins une information représentative de la courbure définie localement autour de l'arête considérée ;
- d'au moins une information représentative de la dynamique géométrique définie localement.

La prise en compte de ces deux critères permet, comme on le verra par la suite, d'optimiser le choix des fusions à effectuer, en supprimant en priorité les éléments les moins significatifs perceptuellement.

De façon préférentielle, ladite étape de sélection met en oeuvre une queue de priorité des arêtes à fusionner, pilotant le processus de décimation, en fonction d'un critère prioritaire, ladite information représentative de la courbure, puis d'un critère secondaire, ladite information représentative de la dynamique géométrique.

Cette hiérarchie de critères permet d'atteindre une bonne efficacité.

Avantageusement, ladite étape de sélection gère un seuil de courbure, seules les arêtes ayant une courbure inférieure audit seuil étant considérées pour l'application dudit critère secondaire, ledit seuil étant augmenté lorsqu'aucune arête ne présente plus une courbure inférieure à ce dernier.

Selon différents modes de réalisation particuliers, ladite information représentative de la dynamique géométrique peut appartenir au groupe comprenant :
- longueur de l'arête considérée ;
- une moyenne des surfaces des faces avoisinant ladite arête considérée ;
- une moyenne des longueurs des arêtes adjacentes aux sommets formant ladite arête considérée ;
- une combinaison de longueurs d'arêtes et/ou de surfaces de faces ;
- toute autre grandeur caractéristique reliée à la densité locale.

Comme on le verra par la suite, la prise en compte de la longueur de l'arête est une technique simple, et fournissant de très bons résultats.

La décimation peut notamment être interrompue en fonction d'un des critères appartenant au groupe comprenant :
- un taux de compression atteint ;
- une complexité géométrique atteinte, exprimée par un nombre de sommets ou de faces ;
- un seuil de courbure atteint.

De façon avantageuse, le procédé de l'invention comprend également une étape de pseudo-optimisation, après ladite étape de décimation par fusion d'une arêtes, assurant le positionnement du sommet résultant de ladite fusion de manière à réduire la déviation géométrique entre ledit maillage source M et ledit maillage simplifié M'.

Ladite étape de pseudo-optimisation peut avantageusement consister à dénombrer les arêtes vives autour des deux sommets formant l'arête à fusionner, et à distinguer les deux cas suivants :
- si les nombres d'arêtes vives sont les mêmes autour des deux sommets, on place le sommet résultant de la fusion au milieu du segment reliant lesdits sommets ;
- si les nombres d'arêtes vives sont différents, on place le sommet résultant de la fusion sur le sommet présentant le plus grand nombre d'arêtes vives.

Selon un premier mode de mise en oeuvre de l'invention, le procédé de simplification d'un maillage source constitue une étape d'initialisation d'un procédé d'optimisation géométrique d'un maillage.

L'invention concerne également un tel procédé d'optimisation géométrique d'un maillage source. comprenant une étape d'initialisation mettant en oeuvre le procédé de simplification décrit ci-dessus.

Selon un second mode de mise en oeuvre de l'invention, le procédé de simplification d'un maillage source peut être utilisé seul.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre le principe d'une fusion d'arête ;
- la figure 2 illustre le principe de la queue de priorité combinant la courbure et la dynamique géométrique définies localement, selon l'invention ;
- la figure 3 illustre le dénombrage des arêtes vives autour d'un sommet du maillage ;
- la figure 4 présente le principe de la pseudo optimisation entre fusion d'arêtes, selon l'invention.

### 6. Description d'un mode de réalisation de l'invention

### 6.1. Simplification géométrique

Ainsi qu'indiqué précédemment, l'invention concerne notamment une nouvelle technique de simplification d'un maillage 3D, reposant sur la mise en oeuvre d'une queue de priorité combinant la courbure locale et la dynamique géométrique locale. Cette technique présente notamment l'avantage de conserver jusqu'à un niveau élevé de décimation, les singularités sur les maillages. Elle possède de plus une vitesse d'exécution intéressante.

Selon un aspect préférentiel de l'invention, on construit une queue de priorité gérant l'opérateur topologique de fusion d'arêtes. Cette queue de priorité combine les critères de courbure locale et de dynamique géométrique locale, afin d'exploiter au mieux le degré de liberté donné par l'ordre des transformations à réaliser sur le maillage.

La simplification d'un maillage M consiste à construire un maillage M' de complexité géométrique réduite, qui conserve une faible déviation géométrique avec M.

L'algorithme de simplification géométrique doit permettre de spécifier une résolution géométrique au sommet prêt. Pour cela, on choisi un opérateur topologique élémentaire de simplification présentant de bonnes propriétés : conservation de la topologie dans une certaine mesure de décimation, et absence de création de trous sur les surfaces, et conservation des orientations.

Cet opérateur topologique élémentaire est la fusion d'arêtes, tel que défini par exemple par HOPPE (document déjà cité) qui est illustré en fi gure 1.

La fusion d'arêtes 10 consiste à fusionner les deux sommets adjacents 11 et 12 en un sommet 13, à supprimer les deux faces 14 et 15 et à positionner le sommet 13 résultant de la fusion. On notera que cette transformation est réversible (possibilité d'insertion 16 d'un sommet).

Chaque transformation élémentaire décime le maillage approximant M'. La qualité de l'approximation se dégrade donc au cours de la décimation, ou reste au mieux invariante. Afin de limiter les dégradations apportées au maillage, on souhaite bien sûr effectuer tout d'abord les transformations affectant le moins possible le modèle.

Pour cela, on définit une queue de priorité contenant toutes les transformations réalisables sur le maillage (soit approximativement le nombre d'arêtes). Durant la décimation, la transformation de moindre coût de la queue de priorité est réalisée, puis supprimée de la queue. Le coût dans le voisinage modifié par l'opération précédente est alors recalculé. et les nouvelles transformations potentielles sur le maillage sont insérées dans la queue de priorité, après en avoir calculé le coût.

Les singularités géométriques, qui sont des parties très informatives, doivent être conservées le plus longtemps possible pendant la décimation. En particulier, les régions de forte courbure apparaissent comme très informatives. En conséquence, le premier critère de tri sur les transformations élémentaires est donc lié à la courbure locale autour de l'arête à fusionner.

On appelle courbure C(Xi) autour d'un sommet Xi l'angle maximal entre les normales à deux faces adjacentes autour du sommet Xi. On appelle ensuite courbure autour d'une arête (repérée par deux sommets Xi et Xj) la moyenne de ces critères évaluée en chaque sommet.

Un second critère basé sur la longueur de l'arête à fusionner, permettant de réduire la densité géométrique du maillage et d'obtenir un bon rapport d'aspect sur les triangles résultants, est mis en oeuvre.

On peut également utiliser une formule usuelle représentative de la compacité. Cependant, la longueur de l'arête à fusionner présente les avantages :
- de fournir un maillage de densité uniforme dans les régions de courbure voisine ;
- de conserver une bonne compacité des triangles, puisque ce critère tend à créer des triangles équilatéraux ;
- de présenter un faible coût de calcul.

En d'autres termes, la queue de priorité selon cette mise en oeuvre de l'invention repose simultanément sur la prise en compte des deux aspects suivants :
- un petit triangle n'est intéressant que dans une région hautement informative (soit une région de forte courbure) ;
- il est souhaitable de réduire la densité d'un maillage afin d'en réduire sa complexité.

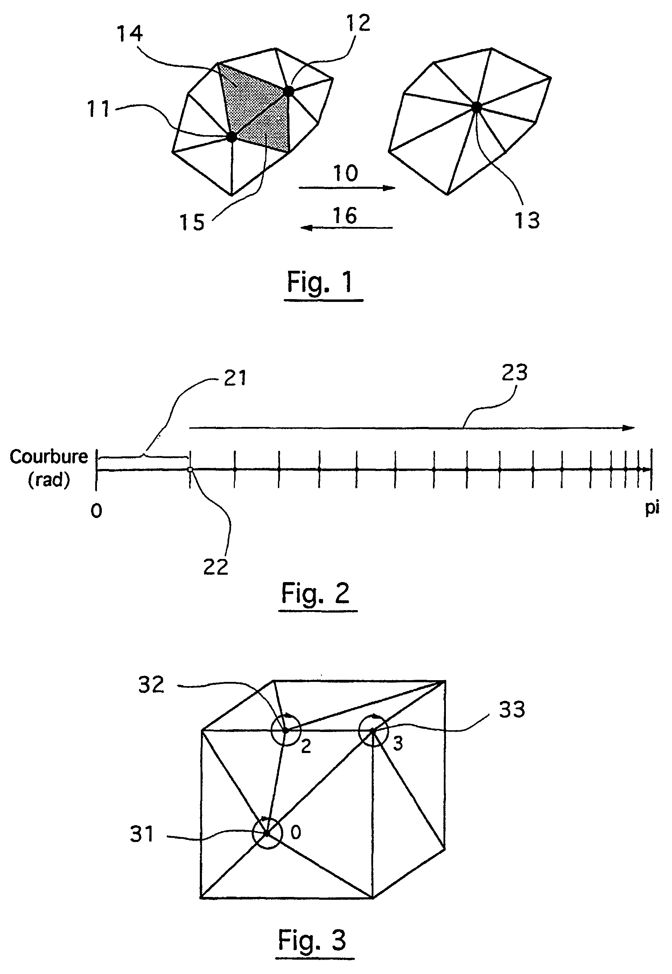

Les deux critères pris en compte selon l'invention sont combinés de manière à obtenir le comportement illustré par la figure 2. Cette figure est une échelle de la courbure, graduée de 0 à n, en radians.

Sur les régions de faible courbure 21, inférieures au premier seuil 22, la densité est réduite, et la compacité obtenue est raisonnable, puisque les arêtes de longueur minimale sont fusionnées.

Le seuil définissant une faible courbure est ensuite augmenté (23), lorsqu'il n'y a plus de transformation possible sur le segment de faible courbure 21.

Ainsi, sur les niveaux de décimation les plus faibles, la contrainte de courbure est automatiquement relâchée, afin d'atteindre la complexité géométrique fixée.

La queue de priorité possède donc deux niveaux de contrainte, organisés suivant une hiérarchie : la courbure en est le critère prioritaire, et la densité en est le critère secondaire.

### 6.2 Pseudo-optimisation

Après une opération de fusion d'arêtes, on s'autorise à placer le sommet résultant de la fusion sur la position de l'optimum probable.

Pour cela, on introduit la notion d'arête vive : une arête est vive lorsque l'angle formé par les normales aux deux faces adjacentes est supérieur à un seuil fixé paramétrable. On dénombre ensuite le nombre d'arêtes vives autour des sommets de l'arête à fusionner, ainsi que cela est illustré en figure 3. Le sommet 31 n'est associé à aucune arête vive, le sommet 32 à deux arêtes vives et le sommet 33 à trois arêtes vives.

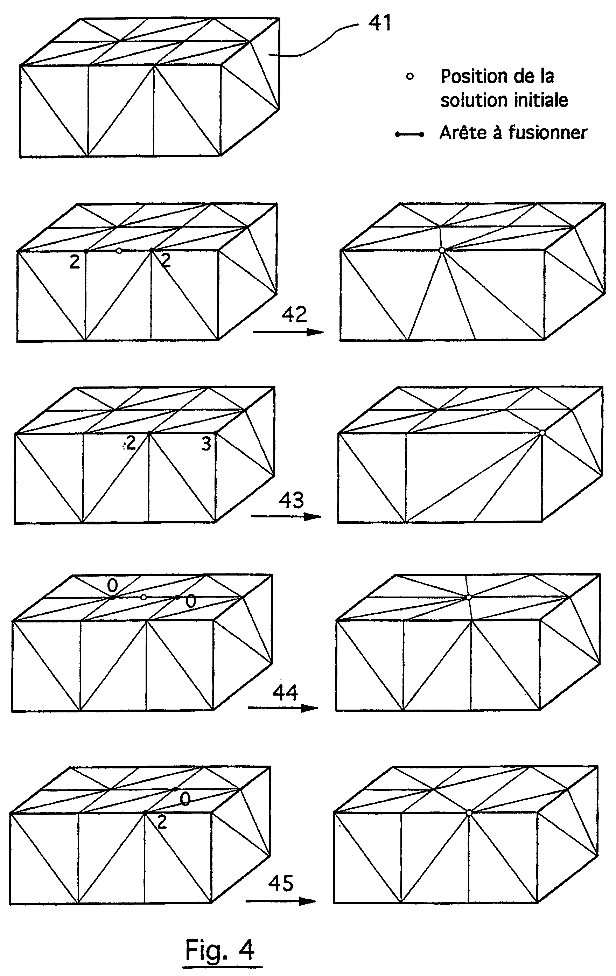

On déduit de ce dénombrement deux cas pour l'initialisation, ainsi que cela est illustré en figure 4 :
- si les nombres d'arêtes vives autour de Xₐ et autour de X_{b} sont identiques, on effectue l'initialisation au milieu du segment formant l'arête à fusionner. Sur les zones planes de faible courbure, cela permet de conserver une bonne compacité sur les triangles voisins. Sur une arête vive régulière (nombres d'arêtes vives égaux à 2), cela permet de positionner le sommet proche de l'arête vive qui sera conservé au cours de l'optimisation ;
- si les nombres d'arêtes vives autour de Xₐ et autour X_{b} sont différents, l'initialisation est effectuée sur le sommet présentant le plus grand nombre d'arêtes vives. Dans les cas les plus courants, l'optimum est atteint à partir de cette position initiale.

Dans l'exemple de la figure 4, dans lequel le maillage source correspond à un parallélépipède 41, on constate que cette heuristique place le sommet :
- sur le coin du parallélépipède lorsque l'arête à fusionner forme un coin 43 ;
- et sur l'arête vive régulière du parallélépipède lorsque l'arête commence sur la région plane et se termine sur l'arête vive 45.

Les situations où le nombre d'arêtes vives est le même autour des deux sommets sont illustrés en 42 et 44.

### 6.3 Applications

Comme indiqué précédemment, la technique de simplification de l'invention (avec ou sans la pseudo optimisation) peut être mise en oeuvre seule, pour offrir une technique d'approximation de maillage, ou comme une étape d'initialisation d'une procédure plus complète d'optimisation géométrique, telle que par exemple celle décrite dans la demande de brevet FR-98 13090, déjà citée.

## Revendications

1. Procédé de simplification d'un maillage source M formé d'une pluralité de surfaces définies par des sommets, des faces et des orientations sur ces dernières, ledit procédé mettant en oeuvre une étape de décimation par fusion d'arête, consistant à ramener une arête à décimer, définie par deux sommets (11, 12), à un sommet unique (13) se situant sur le segment défini par lesdits deux sommets (11, 12), de façon à obtenir un maillage simplifié M',
**caractérisé en ce qu'**il comprend une étape de sélection d'une fusion d'arête à effectuer, parmi toutes les fusions d'arête possibles, tenant compte :
- d'au moins une information représentative de la courbure définie localement autour de l'arête considérée ; et
- d'au moins une information représentative de la dynamique géométrique définie localement.

2. Procédé de simplification d'un maillage source selon la revendication 1, **caractérisé en ce que** ladite étape de sélection met en oeuvre une queue de priorité des arêtes à fusionner, permettant de piloter le processus de décimation, en fonction d'un critère prioritaire, ladite information représentative de la courbure, puis d'un critère secondaire, ladite information représentative de la dynamique géométrique.

3. Procédé de simplification d'un maillage source selon la revendication 2, **caractérisé en ce que** ladite étape de sélection gère un seuil de courbure, seules les arêtes ayant une courbure inférieure audit seuil étant considérées pour l'application dudit critère secondaire, . ledit seuil étant augmenté lorsque aucune arête ne présente plus une courbure inférieure à ce dernier.

4. Procédé de simplification d'un maillage source selon l'une quelconque des revendications 1 à 3, **caractérisé en ce que** ladite information représentative de la dynamique géométrique appartient au groupe comprenant :
- longueur de l'arête considérée ;
- une moyenne des surfaces des faces avoisinant ladite arête considérée ;
- une moyenne des longueurs des arêtes adjacentes aux sommets formant ladite arête considérée ;
- une combinaison de longueurs d'arêtes et/ou de surfaces de faces.

5. Procédé de simplification d'un maillage source selon l'une quelconque des revendications 1 à 4, **caractérisé en ce que** la décimation est interrompue en fonction d'un des critères appartenant au groupe comprenant :
- un taux de compression atteint ;
- une complexité géométrique atteinte, exprimée par un nombre de sommets ou de faces ;
- un seuil de courbure atteint.

6. Procédé de simplification d'un maillage source selon l'une quelconque des revendications 1 à 5, **caractérisé en ce qu'**il comprend une étape de pseudo-optimisation après ladite étape de décimation par fusion d'une arête, positionnant le sommet résultant de ladite fusion de manière à réduire la déviation géométrique entre ledit maillage source M et ledit maillage simplifié M'.

7. Procédé de simplification d'un maillage source selon la revendication 6, **caractérisé en ce que** ladite étape de pseudo-optimisation consiste à dénombrer les arêtes vives autour des deux sommets formant l'arête à fusionner, et à distingue: les deux cas suivants :
- si les nombres d'arêtes vives sont les mêmes autour des deux sommets, on place le sommet résultant de la fusion au milieu du segment reliant lesdits sommets (42, 44) ;
- si les nombres d'arêtes vives sont différents, on place le sommet résultant de la fusion sur le sommet présentant le plus grand nombre d'arêtes vives (43, 45).

8. Procédé de simplification d'un maillage source selon l'une quelconque des revendications 1 à 6, **caractérisé en ce qu'**il constitue une étape d'initialisation d'un procédé d'optimisation géométrique d'un maillage.

9. Procédé d'optimisation géométrique d'un maillage source, **caractérisé en ce qu'**il comprend une étape d'initialisation mettant en oeuvre le procédé de simplification de l'une quelconque des revendications 1 à 7.

## Patentansprüche

1. Vereinfachungsverfahren für ein Ausgangsnetzwerk M, das von einer Vielzahl von Flächen gebildet wird, welche durch Knoten, Oberflächen und Richtungsangaben auf diesen Oberflächen definiert sind, wobei das Verfahren einen Löschungsschritt durch Zusammenziehen (fusion) von Kanten umfasst, welcher darin besteht, dass eine von zwei Knoten (11, 12) definierte, zu löschende Kante zu einem einzelnen Knoten (13) reduziert wird, der sich auf dem von den zwei Knoten (11, 12) definierten Segment befindet, so dass ein vereinfachtes Netzwerk M' erzielt wird,
**dadurch gekennzeichnet, dass** das Verfahren einen Auswahlschritt umfasst zum Auswählen einer zusammenzuziehenden Kante aus allen möglichen zusammenziehbaren Kanten, wobei berücksichtigt wird:
- mindestens eine Information betreffend die Krümmung, lokal definiert um (autour) die zu betrachtende Kante, und
- mindestens eine Information betreffend die örtlich definierte dynamische Geometrie (dynamique geometrique).

2. Vereinfachungsverfahren für ein Ausgangsnetzwerk nach Anspruch 1, **dadurch gekennzeichnet, dass** der Auswahlschritt gemäß einer Prioritätenfolge der zusammenzuziehenden Kanten erfolgt, die es ermöglicht, die Auswahl in Abhängigkeit von einem primären Kriterium (critère prioritaire), der besagten Information betreffend die Krümmung, und einem sekundären Kriterium (critere secondaire), der besagten Information betreffend die dynamische Geometrie, vorzunehmen.

3. Vereinfachungsverfahren für ein Ausgangsnetzwerk nach Anspruch 2, **dadurch gekennzeichnet, dass** im Auswahlschritt ein Krümmungsschwellenwert verwendet wird, wobei nur diejenigen Kanten, deren Krümmungen unterhalb von diesem Schwellenwert liegen, für die Anwendung des sekundären Kriteriums berücksichtigt werden, und
wobei dieser Schwellenwert dann erhöht wird, wenn es keine Kante mit einer geringeren Krümmung als dem letzten Schwellenwert (ce dernier) mehr gibt.

4. Vereinfachungsverfahren für ein Ausgangsnetzwerk nach einem der Ansprüche 1 bis 3, **dadurch gekennzeichnet, dass** die Information betreffend die dynamische Geometrie zu der folgendes umfassenden Gruppe gehört:
- Länge der betrachteten Kante,
- einen Mittelwert der Oberflächen der zur betrachteten Kante benachbarten Flächen,
- einen Mittelwert der Länge derjenigen Kanten, die mit jenen Knoten verbunden (adjacentes) sind, die die betrachtete Kante bilden.
- eine Kombination der Länge der Kanten und/oder der Oberflächen der Flächen.

5. Vereinfachungsverfahren für ein Ausgangsnetzwerk nach einem der Ansprüche 1 bis 4, **dadurch gekennzeichnet, dass** die Löschung unterbrochen wird in Abhängigkeit von einem Kriterium aus derjenigen Gruppe, die umfasst:
- eine erreichte Kompressionsrate;
- eine erreichte geometrische Komplexität, ausgedrückt durch eine Zahl von Knoten oder von Flächen;
- ein erreichter Krümmungsschwellenwert.

6. Vereinfachungsverfahren für ein Ausgangsnetzwerk nach einem der Ansprüche 1 bis 5, **dadurch gekennzeichnet, dass** es einen Pseudo-Optimierungsschritt nach dem Löschungsschritt durch Zusammenziehen einer Kante umfasst, wobei in dem Pseudo-Optimierungsschritt der Knoten, der aus dem besagten Zusammenziehen hervorgeht, so angeordnet wird, dass die geometrische Abweichung zwischen dem Ausgangsnetzwerk M und dem vereinfachten Netzwerk M' verringert wird.

7. Vereinfachungsverfahren für ein Ausgangsnetzwerk nach Anspruch 6, **dadurch gekennzeichnet, dass** der Pseudo-Optimierungsschritt darin besteht, die scharfen Kanten um die zwei Knoten, welche die zusammenzuziehende Kante bilden, zu zählen und folgende zwei Fälle zu unterscheiden:
- falls die Zahl der scharfen Kanten um die zwei Knoten gleich ist, so wird der sich aus dem Zusammenziehen ergebende Knoten in die Mitte des Segmentes gelegt, das die besagten Knoten (42, 44) miteinander verbindet;
- falls die Zahlen von scharfen Kanten verschieden sind, so wird der sich aus dem Zusammenziehen ergebende Knoten auf den Knoten gelegt, der die größte Zahl scharfer Kanten (43, 45) aufweist.

8. Vereinfachungsverfahren für ein Ausgangsnetzwerk nach einem der Ansprüche 1 bis 6, **dadurch gekennzeichnet**, das es einen Initialisierungsschritt eines geometrischen Optimierungsverfahrens eines Netzwerkes bildet.

9. Geometrisches Optimierungsverfahren für ein Ausgangsnetzwerk, **dadurch gekennzeichnet, dass** es einen Initialisierungsschritt umfasst, in dem das Vereinfachungsverfahren nach einem der Ansprüche 1 bis 7 durchgeführt wird.

## Claims

1. Method for simplifying a source mesh M formed by a plurality of surfaces defined by vertices, faces and orientations on the latter, the said method implementing a step of decimation by edge collapsing, consisting in reducing an edge to be decimated, which is defined by two vertices (11, 12), to a single vertex (13) lying on the segment defined by the said two vertices (11, 12), so as to obtain a simplified mesh M',
**characterised in that** it comprises a step of selecting an edge collapse to be carried out, from among all the possible edge collapses, taking into account:
- at least one information item representing the curvature defined locally around the edge in question; and
- at least one information item representing the locally defined geometrical dynamics.

2. Method for simplifying a source mesh according to Claim 1, **characterised in that** the said selection step implements a priority queue of the edges to be collapsed, making it possible to control the decimation process as a function of a priority criterion, the said information item representing the curvature, then a secondary criterion, the said information item representing the geometrical dynamics.

3. Method for simplifying a source mesh according to Claim 2, **characterised in that** the said selection step operates with a curvature threshold, only the edges having a curvature less than the said threshold being considered for application of the said secondary criterion,
the said threshold being increased when no edge any longer has a curvature less than it.

4. Method for simplifying a source mesh according to any one of Claims 1 to 3, **characterised in that** the said information item representing the geometrical dynamics belongs to the group comprising:
- length of the edge in question;
- an average of the areas of the faces neighbouring the said edge in question;
- an average of the lengths of the edges adjacent to the vertices forming the said edge in question;
- a combination of edge lengths and/or face areas.

5. Method for simplifying a source mesh according to any one of Claims 1 to 4, **characterised in that** the decimation is stopped as a function of one of the criteria belonging to the group comprising:
- a compression ratio having been reached;
- a geometrical complexity having been reached, expressed by a number of vertices or faces;
- a curvature threshold having been reached.

6. Method for simplifying a source mesh according to any one of Claims 1 to 5, **characterised in that** it comprises a pseudo-optimisation step after the said step of decimation by collapsing an edge, positioning the vertex resulting from the said collapse so as to reduce the geometrical deviation between the said source mesh M and the said simplified mesh M'.

7. Method for simplifying a source mesh according to Claim 6, **characterised in that** the said pseudo-optimisation step consists in counting the sharp edges around the two vertices forming the edge to be collapsed, and in distinguishing between the two following cases:
- if the numbers of sharp edges are the same around both vertices, the vertex resulting from the collapse is placed in the middle of the segment joining the said vertices (42, 44);
- if the numbers of sharp edges are different, the vertex resulting from the collapse is placed on the vertex having the larger number of sharp edges (43, 45).

8. Method for simplifying a source mesh according to any one of Claims 1 to 6, **characterised in that** it constitutes an initialisation step of a method for geometrical optimisation of a mesh.

9. Method for geometrically optimising a source mesh, **characterised in that** it comprises an initialisation step implementing the simplification method according to any one of Claims 1 to 7.
